# EUROPEAN PATENT APPLICATION

(11) **EP 1 168 788 A1**
(43) Date of publication of application: **02.01.2002**
(21) Application number: 00985957.0
(22) Date of filing: 27.12.2000
(51) Int. Cl.: H04M 3/42, H04M 3/53, H04M 11/06, H04B 7/26, H04L 12/54, H04N 7/14, H04M 1/65

(54) **MOBILE COMMUNICATIONS SYSTEM PROVIDED WITH ANSWERING SERVICE FUNCTION AND NETWORK DEVICE THEREOF AND RADIO COMMUNICATION TERMINAL**

(30) Priority: 27.12.1999 JP 36976899
(71) Applicant: Kabushiki Kaisha Toshiba, Tokyo 105-8001 (JP)
(72) Inventor: SAMATA, Tatsuo, Asao-ku, Kawasaki-shi, Kanagawa 215-0021 (JP)
(74) Representative: HOFFMANN - EITLE
(86) International application number: JP0009331
(87) International publication number: WO0149014

(57) **Abstract**

In an answering service center, when a response registration request has arrived from a radio communication terminal, the multiplex information the radio communication terminal can use is determined during the connecting process. The result of the determination, together with the response, is stored in a terminal information storage section 74a. When a call for a radio communication terminal whose user is absent has arrived, the best multiplex information for both of the terminals is selected on the basis of the multiplex information stored in the terminal information storage section 17a and the multiplex information the caller's radio communication terminal can use. According to the selected multiplex information, the multiplexed message is transmitted from the caller's radio communication terminal. Then, the message is stored in a message storage section 74b.

## Description

### Technical Field

This invention relates to a mobile communication system, such as a mobile phone system, a cordless telephone system, or a satellite communication system, and more particularly to a system with an answering service function, a network system thereof, and radio communication terminals.

### Background Art

Mobile communication systems include digital mobile phone systems, such as PDC (Personal Digital Cellular) or GSM (Global System for Mobile Communication), and digital cordless telephone systems, such as PHS (Personal Handyphone System), DECT (Digital European Cordless Telephone), or PCS (Personal Communication Service). In these mobile communication systems, unlike wired telephone systems, a base station cannot call a radio communication terminal, when the power supply of the radio communication terminal is off or the terminal is outside any radio communication range.

To overcome this shortcoming, a mobile communication system is generally provided with an answering service function differing from that of a wired telephone system. The answering service function of the mobile communication system is achieved as follows. For example, an answering service center is provided in a network that switches between radio communication terminals. When a radio communication terminal calls another radio communication terminal, it is determined whether the called-party's radio communication terminal is communicable. If it is incommunicable, a communication link is formed between the answering service center and the caller's terminal and then the message that communication is impossible is sent and the caller is prompted to input a message. In this state, when the user enters a message at the caller's terminal, the message is sent from the caller's terminal to the answering service center, which receives the message and stores it in a memory.

When the called-party's radio communication terminal has returned from, for example, outside a communication range to inside a communication range and becomes communicable, the answering service center informs the called-party's radio communication terminal of the message that a message has been stored. In this state, when the called-party's radio communication terminal requests the transmission of the message, the answering service center reads the relevant message from the memory and sends it to the requesting radio communication terminal. In this way, the called-party's radio communication terminal can get the message for itself left when it was incommunicable.

On the other hand, in mobile communication systems, the technique for multiplexing not only audio data but also video data and computer data and transmitting the multiplex data by using a broader radio communication band and new encoding techniques has been developed and put partially to practice use. With the realization of such multimedia radio transmission, videophone communication or transmission of video data with computer data of explanation or the like can be achieved, which is very convenient for users.

In such multimedia radio communications, however, multiplexing and demultiplexing capabilities might differ from one radio communication terminal to another. Even in radio communication terminals with the same communication capabilities, the type or amount of information to be multiplexed might differ from communication to communication. Therefore, when such multimedia information was received and stored by a conventional scheme that dealt with only audio information, the called-party's radio communication terminal was sometimes unable to reproduce the message.

### Disclosure of Invention

The object of the present invention is to provide not only a mobile communication system with an answering service function that enables the called-party's radio communication terminal to reproduce the message reliably even when radio communication terminals differ in communication capabilities or when the used communication capability varies from communication to communication, but also a network system thereof and radio communication terminals.

To accomplish the foregoing object, in a mobile communication system including a plurality of radio communication terminals differing in communication capabilities and a network for switching between the radio communication terminals to enable communication, the present invention provides the network with first storage means for storing the communication capability of each of the radio communication terminals, determining means for determining whether a second terminal is in a communicable state when a request to communicate with the second terminal has arrived from a first terminal in the radio communication terminals, communication capability selecting means, and alternative communication control means.

When the determining means has determined that the second terminal is in an incommunicable state, the communication capability selecting means selects the communication capability used for communication with the first terminal on the basis of the communication capability the first terminal requesting communication has and the communication capability of the second terminal stored in the first storage means. Then, on the basis of the selected communication capability, the alternative communication control means receives message arrived from the first terminal and stores the received message in second storage means in such a manner that the received message is caused to correspond to the selected communication capability.

Accordingly, with the present invention, when the message transmitted by the caller's radio communication terminal is received in place of the called party, the communication capability to be used is determined, taking into account not only the communication capability of the caller's radio communication terminal but also the communication capability of the called-party's radio communication terminal previously stored. That is, the communication capability both the caller's radio communication terminal and the called-party's radio communication terminal can use is selected. Then, the message is received in place of the called-party's radio communication terminal.

This enables the caller-party's radio communication terminal to reproduce the message reliably, even when the communication capability of the caller's radio communication terminal differs from that of the called-party's radio communication terminal, or even when the communication capability the caller requests varies from communication to communication.

Specifically, when each radio communication terminal is provided with a plurality of multiplexing schemes to multiplex different types of information,
the communication capability decision means compares a plurality of multiplexing schemes the first terminal requesting communication has with a plurality of multiplexing schemes provided for the second terminal and stored in the first storage means and selects the one whose multiplexing efficiency is the highest from the multiplexing schemes both the first and second terminals have.

With this configuration, even when the multiplexing scheme the caller's radio communication terminal has differs from the multiplexing scheme the called-party's radio communication terminal has, or even when the multiplexing scheme the caller's radio communication terminal requests varies from communication to communication, the called-party's radio communication terminal can separate the message transmitted from the network reliably and reproduce the message.

Furthermore, the present invention is characterized in that the alternative communication control means, when receiving message from the first terminal, stores a payload constituting the message and communication capability in such a manner that the former and the latter are caused to correspond to each other.

With this configuration, for example, when audio data and video data are multiplexed with the payload, the payload can be separated and reproduced at the called-party's radio terminal without providing additional means for synchronizing the audio and video data.

Still furthermore, the present invention is characterized by further providing the network with communication capability storage control means, wherein when a specific access request to the network has arrived from a radio communication terminal, the communication capability storage control means, detects the communication capability the requesting radio communication terminal has in a connecting process for establishing a communication link between the network and the requesting radio communication terminal and stores the detected communication capability in the first storage means.

One example of the access request is a response registration request. Another example is a position registration request a radio communication terminal transmits when the power supply of the radio communication terminal is turned on, or when the radio communication terminal moves from one cell to another.

As described above, when the communication capability of a radio communication terminal is detected and stored making use of the response registration request or position registration request, this makes it unnecessary to add a special process for storing the communication capability of a radio communication terminal into the network.

### Brief Description of Drawings

FIG. 1 schematically shows the configuration of an embodiment of a mobile communication system according to the present invention;
FIG. 2 is a circuit block diagram showing the configuration of a radio communication terminal in the system of FIG. 1;
FIG. 3 is a block diagram showing the functional configuration of an answering service center in the system of FIG. 1;
FIG. 4 shows a frame structure of multiplexed transmission information;
FIG. 5 shows an example of multiplex information;
FIG. 6 shows an example of terminal information stored in the terminal information storage section of the answering service center;
FIG. 7 shows an example of message stored in the message storage section of the answering service center;
FIG. 8 is a flowchart showing the terminal information registering control procedure followed by the answering service center of FIG. 3;
FIG. 9 is a flowchart showing the first half of the message reception control procedure followed by the answering service center of FIG. 3;
FIG. 10 is a flowchart showing the second half of the message reception control procedure followed by the answering service center of FIG. 3; and
FIG. 11 is a flowchart showing the message transmission control procedure followed by the answering service center of FIG. 3.

### Best Mode for Carrying Out of the Invention

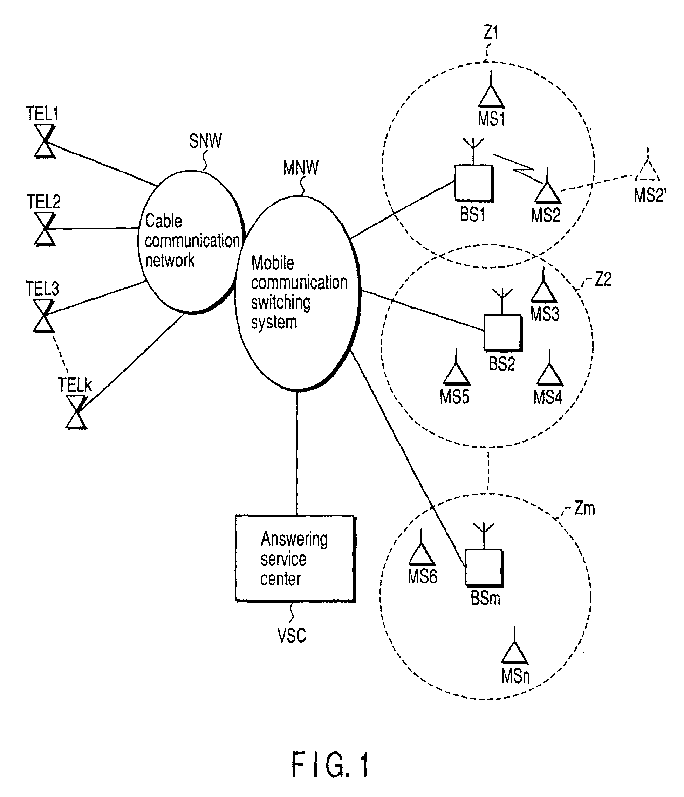

FIG. 1 schematically shows the configuration of an embodiment of a mobile communication system according to the present invention.

In FIG. 1, a plurality of base stations BS1 to BSm are distributed in a service area of the system. The base stations BS1 to BSm form radio zones Z1 to Zm respectively. Each radio zone is called a cell. Each of the base stations BS1 to BSm is connected via a cable channel to a mobile communication switching system MNW. The mobile communication switching system is connected to a cable communication network SNW. The cable communication network SNW is composed of subscriber telephone networks, including an ISDN (Integrated Services Digital Network) and a PSTN (Public Switched Telephone Network), and computer networks, including the Internet, and CATV (Cable Television) networks.

Radio communication terminals MS1 to MSn are composed of cellular phones and PDAs (Personal Digital Assistance). The radio communication terminals MS1 to MSn are connected via radio channels to the nearest base stations BS1 to BSm in the radio zones Z1 to Zm. They are further connected via the base stations BS1 to BSm to the mobile communication switching system MNW. The mobile communication switching system MNW manages the operating state and position of each of the radio communication terminals MS1 to MSn. According to the originating call or terminating call, the mobile communication switching system MNW switches between the radio communication terminals MS1 to MSn or between the radio communication terminals MS1 to MSn and the radio communication terminals TEL1 to TELk connected to the cable communication network SNW.

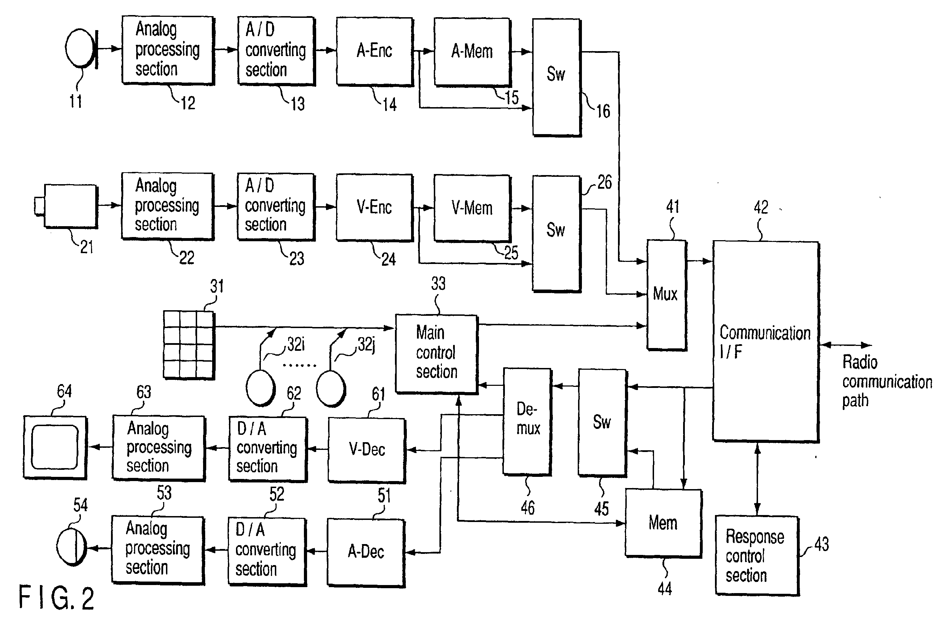

The radio communication terminals MS1 to MSn are constructed as follows. FIG. 2 is a circuit block diagram showing the configuration of one of the radio communication terminals MS1 to MSn.

In FIG. 2, the audio signal outputted from a microphone 11 is first subjected to analog signal processing, such as amplification, at an analog processing section 12. Then, after an A/D converting section 13 converts the resulting signal into a digital signal, an audio encoding section (A-Enc) 14 compresses the digital signal by encoding. The encoding scheme uses a compression scheme complying with, for example, the MPEG-4 standard. The timing of the encoded audio data outputted from the audio encoding section 14 is adjusted by an audio memory (A-Mem) 15 and a switch (SW) 16. Then, the adjusted audio data is inputted to a multiplexing section (Mux) 41.

On the other hand, the video signal outputted from a camera 21 is subjected to analog signal processing, such as amplification, at an analog processing section 22. Then, after an A/D converting section 23 converts the resulting signal into a digital signal, a video encoding section (V-Enc) 24 subjects the digital signal to a video encoding process, thereby compressing the digital signal. The timing of the encoded video data outputted from the video encoding section 24 is adjusted by a video memory (V-Mem) 25 and a switch (SW) 26. Then, the adjusted video data is inputted to the multiplexing section (Mux) 41.

The multiplexing section 41 multiplexes the encoded audio data, the encoded video data, and the computer data outputted from a main control section 33 according to the multiplex format determined in, for example, the ITU-T H.223, standard, thereby creating a payload. Then, a header including a multiplex code is added to the payload.

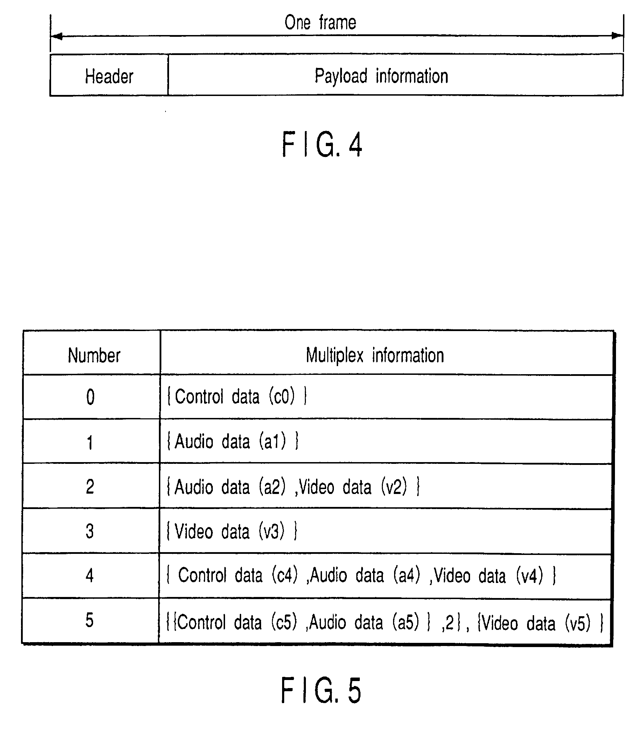

FIG. 4 shows an example of the format. A communication interface (communication I/F) 42 subjects the multiplexed transmission data to error correction encoding, modulation, and others, thereby converting the data into a radio frequency signal. The interface 42 further amplifies the radio frequency signal to a specific transmission power level and transmits the amplified signal to a radio communication path.

In contrast, a communication I/F 42 down-converts the frequency of the radio frequency signal arrived via the radio communication path and subjects the converted signal to demodulation and error correction decoding, thereby converting the signal into baseband transmission data. Then, the transmission data is inputted via a message memory (Mem) 44 and a switch (SW) 45 to a demultiplexing section (De-mux) 46. According to the multiplex code included in the header in the transmission data, the demultiplexing section 46 separates the payload into audio data, video data, and computer data.

After an audio decoding section (A-Dec) 51 audio-decodes the audio data separated by the demultiplexing section 46, a D/A converting section 52 converts the decoded signal into an analog audio signal. Then, an analog processing section 53 subjects the analog audio signal to analog signal processing, such as amplification, and outputs the amplified signal to a speaker 5, which produces sound.

On the other hand, after a video decoding section (V-Dec) 61 video-decodes the video data separated by the demultiplexing section 46, a D/A converting section 62 converts the decoded signal into an analog video signal. Then, an analog processing section 63 subjects the analog video signal to specific analog signal processing, such as amplification, and displays the processed signal on a video display section 64.

The computer data separated by the demultiplexing section 46 is inputted to a main control section 33. The main control section 33 not only stores the data in a data memory (not shown) but also displays the data on the video display section 64 or a text display section (not shown).

The data inputted from dial keys 31 and various function keys 321 to 32j operated by the user is taken in by the main control section 33. The main control section 33 includes, for example, a microprocessor and a program memory. According to the data inputted by the user, the microcomputer performs control of the start and end of radio connection, control of the registration of responses, control of the reception and storage of notice messages, or the like. A response control section 43 transmits a response from its own terminal, with its own terminal set in the answering mode.

To the mobile communication switching system MNW, an answering service center VSC run by, for example, a communication operator is connected. When the called-party's radio communication terminal is incommunicable, the answering service center VSC receives the notice message sent from the caller's radio communication terminal or cable communication terminal in place of the called-party's radio communication terminal and stores it temporarily. For example, the answering service center VSC is constructed as follows.

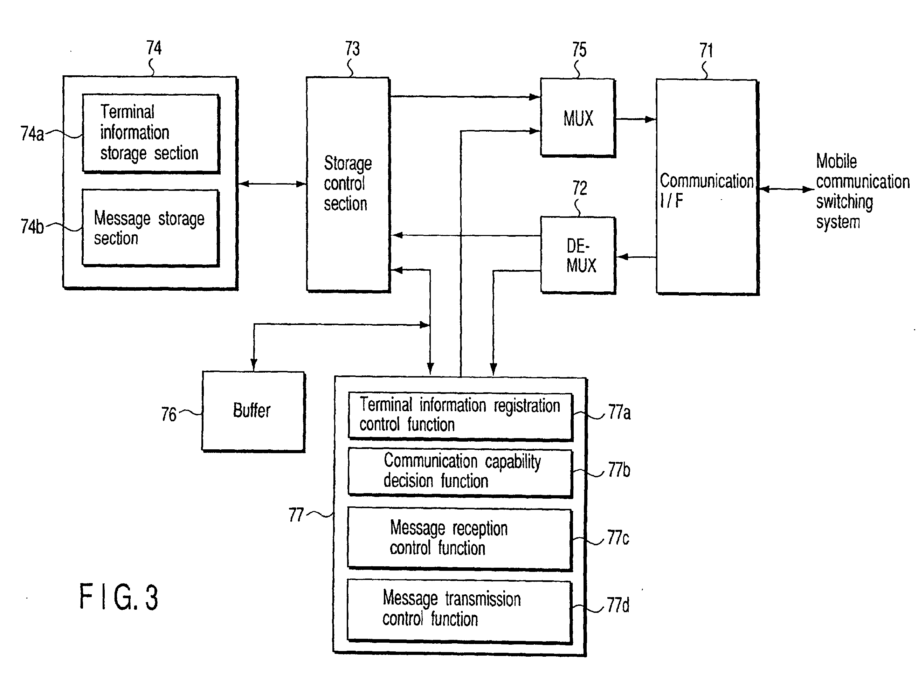

FIG. 3 is a block diagram showing the functional configuration of the answering service center. In FIG. 3, the transmission signal arrived from the caller's radio communication terminal or cable communication terminal via the mobile communication switching system MNW is inputted via a communication interface section (communication I/F) 71 to a demultiplexing section (De-mux) 72. The demultiplexing section 72 separates the transmission signal into a payload including a message or a response and a header. Then, the payload is transferred to a storage control section 73 and the header is inputted to a main control section 77. According to the control information included in the header, the main control section 77 controls the storage control section 73 according to the control information included in the header, thereby storing the payload in a storage unit 74.

On the other hand, the storage control section 73 reads the payload stored in the storage unit 74 under the control of the main control section 77 and inputs it to a multiplexing section (Mux) 75. The multiplexing section 75 adds the header outputted from the main control section 77 to the payload to create transmission data and transmits the transmission data from a communication I/F 71.

The storage unit 74 is provided with a terminal information storage section 74a and a message storage information 74b.

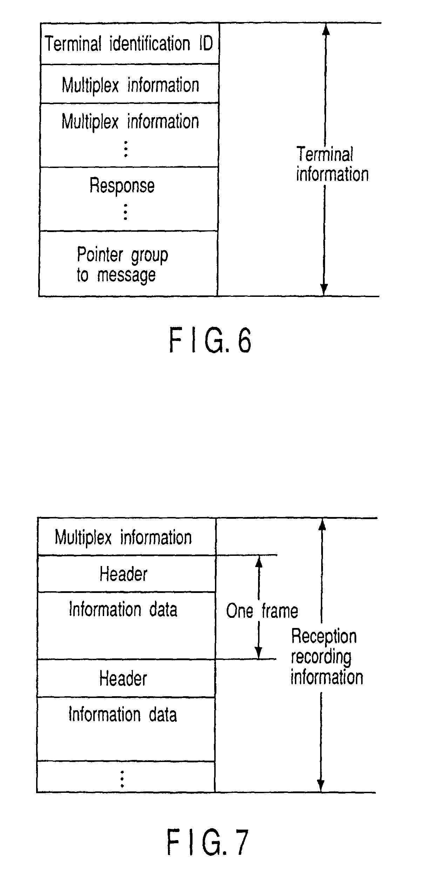

The message storage section 74b is for storing the message sent from the caller's terminal to an incommunicable radio communication terminal. As shown in FIG. 7, in the message storage section 74b, not only the body of the notice message but also the header added to the message and the information representing the multiplexing scheme used in receiving the message are stored.

The terminal information storage section 74a stores pieces of terminal information representing the communication capability of the respective radio communication terminals MS1 to MSn. For example, as shown in FIG. 6, each piece of the terminal information is made up of identification information about the radio communication terminal, multiplex information, an answering response, and a pointer group. The identification information is composed of terminal ID (Identification Code), such as a telephone number or a mail address. The multiplex information represents the multiplexing scheme the called-party's terminal can use. The answering response is a information to be transmitted to the caller's terminal when the called-party's terminal is incommunicable. The pointer group represents the memory address in the message storage section 74b in which the message for the called-party's terminal has been stored.

The main control section 77 supervises the operation of the answering service center VSC. The control function includes a terminal information registration control function 77a, a communication capability decision function 77b, a message reception control function 77c, and a message transmission control function 77d.

When a response registration request has arrived from the radio communication terminals MS1 to MSn, the terminal information registration control function 77a determines all types of multiplex scheme the requesting terminal can use in the process of connecting with the requesting terminal. Then, the terminal information registration control function 77a stores not only the response received after the formation of a communication link but also the multiplex information and the terminal ID of the requesting terminal via a buffer 76 into the terminal information storage section 74a.

When the called-party's radio communication terminal is incommunicable, the communication capability decision means 77b reads multiplex information about the called-party's radio communication terminal from the terminal information storage section 74a. On the basis of the multiplex information about the called-party's radio communication terminal and the multiplex information the caller's terminal can use, the communication capability decision means 77b determines suitable multiplex information used in receiving the message from the caller's terminal in place of the called-party's terminal.

The message reception control means 77c establishes a communication link with the caller's terminal to perform communication on the basis of the multiplex information determined by the communication capability decision means 77b. Then, the notice message reception control means 77c reads the response corresponding to the called-party's radio communication terminal from the terminal information storage section 74a and transmits the response via the communication link to the caller's terminal. At the same time, the message reception control means 77c receives the message transmitted from the caller's terminal and stores it in the message storage section 74b.

When the radio communication terminal returns from the incommunicable state to the communicable state, the message transmission control means 77d determines whether the message for the radio communication terminal has been stored. If the corresponding massage has been stored, the message transmission control means 77d notifies the radio communication terminal that the message has been stored. When a message transmission request has arrived from the radio communication terminal in response to the notice, the message transmission control means 77d reads the corresponding message from the message storage section 74b and transmits the message to the requesting radio communication terminal.

The following is an explanation of the operation related to answering service with the mobile communication system constructed as described above.

In FIG. 1, it is assumed that radio communication terminal MS2 transmits a response registration request before it goes out of radio zone Z1 into an incommunicable range. The response registration request is transmitted from base station BS1 to the answering service center VSC via the mobile communication switching system MNW.

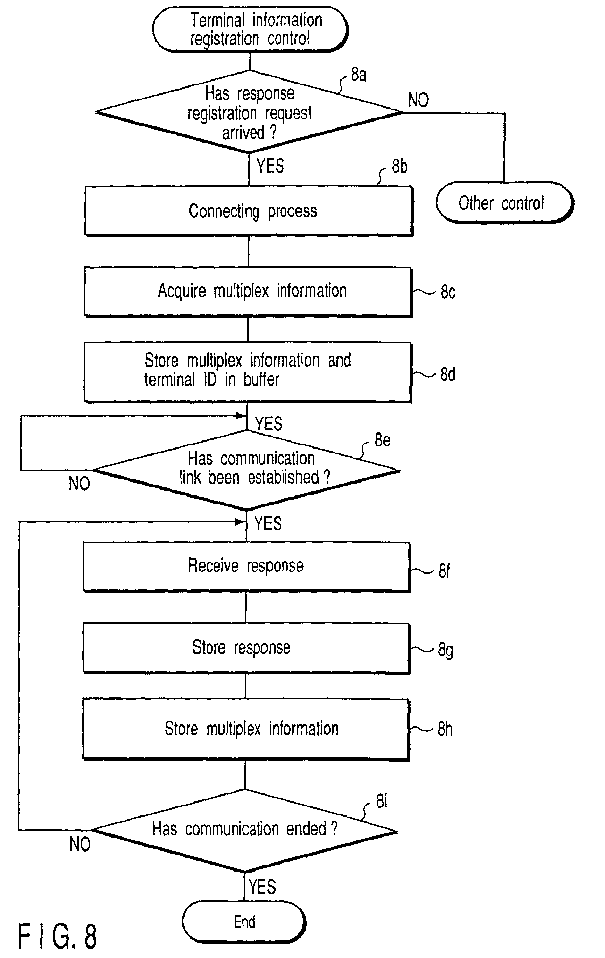

The answering service center VSC monitors the arrival of the response registration request at step 8a as shown in FIG. 8. In this state, when the response registration request has arrived from radio communication terminal MS2, the connecting process for establishing a communication link with the requesting radio communication terminal MS2 is executed at step 8b. Then, during the connecting process, the multiplex information the requesting radio communication terminal MS2 can use is acquired at step 8c. The multiplex information, together with the terminal identification information (terminal ID) about radio communication terminal MS2, is stored temporarily in the buffer 76 (step 8d).

After the connecting process is completed and radio communication terminal MS2 transmits a response, the response is transmitted via the communication link to the answering service center VSC. The response, which is for videophone, is composed of audio data and video data.

After detecting that the communication link has been established at step 8e, the answering service center VSC passes control to step 8f. When the answering service center VSC has received the response transmitted from the radio communication terminal MS2 at step 8f, the demultiplexing section 72 separates the payload into audio data and video data and inputs the header control information to the main control section 77. The main control section 77 controls the storage control section 73 according to the control information, thereby storing the audio data and video data into the terminal information storage section 74a of the storage unit 74 (step 8g). At the same time, the main control section 77 stores the multiple information and terminal identification information stored in the buffer 76 into the terminal information storage section 74a in such a manner that the multiple information and terminal identification information are caused to correspond to the response as shown in FIG. 6 (step 8h). Then, after detecting at step 8i that communication with the radio communication terminal MS2 has been completed, the main control section 77 ends the terminal information registration control.

After completing the transmission of the response, the radio communication terminal MS2 informs the answering service center VSC of the end of the communication and moves outside the radio zone Z2 as shown by, for example, MS2' in FIG. 1.

In this state, it is assumed that, for example, a request for a call to radio communication terminal MS2 has arrived from radio communication terminal MS4. Then, the mobile communication switching system MNW determines that the called-party's radio communication terminal MS2' is incommunicable, because it is outside a communication range, and transfers the call to the answering service center VSC.

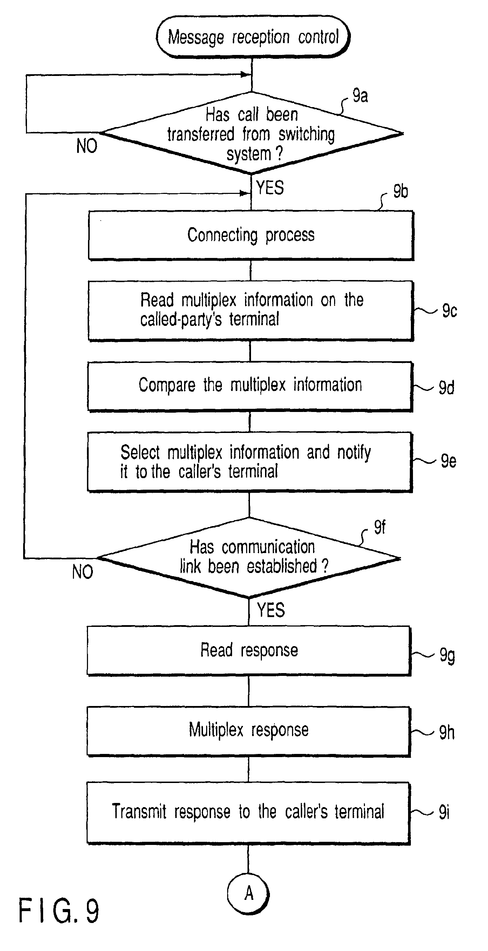

The answering service center VSC is monitoring the transfer of a call from the mobile communication switching system MNW at step 9a as shown in FIG. 9. In this state, when a call has been transferred, the answering service center VSC executes the connecting process with the caller's radio communication terminal MS4 at step 9b. Then, during the connecting process, the answering service center VSC reads the multiplex information about the called-party's radio communication terminal MS2 from the terminal information storage section 74a (step 9c). Then, at step 9d, the answering service center VSC compares the read-out multiplex information with the multiplex information about the caller's radio communication terminal MS4 obtained in the connecting process. On the basis of the comparison, the answering service center VSC, at step 9e, selects the one whose multiplex efficiency is the highest from the pieces of multiplex information that the caller's radio communication terminal MS4 and called-party's radio communication terminal can use. Then, the answering service center VSC informs the caller's radio communication terminal MS4 of the selected piece of multiplex information.

For instance, it is assumed that the caller's radio communication terminal MS4 supports all of the six types of multiplexing schemes shown in FIG. 5, whereas the called-party's radio communication terminal MS2 does not support the ones indicated by number 4 and number 5 of the multiplexing schemes of FIG. 5. In this case, the main control section 77 of the answering service center VSC selects the one whose multiplexing efficiency is the highest from the four types of multiplexing schemes, number 0 to number 3, excluding number 4 and number 5, and informs the caller's radio communication terminal MS4 of the selected multiplexing scheme.

The multiplex information indicates how to combine multiple types of information, for example, audio data, video data, computer data, and control data, with multiplex frames for multiplexing. The multiplex information is composed of a combination of the contents of the multiplex information and numbers representing multiplex information.

For instance, what is shown in ( ) in FIG. 5 is the number of bytes repeated in the information immediately in front of the parentheses. In addition, what are shown in a pair of { } indicate the type of information and the number of bytes repeated. Since the types of information can be nested, { } may be further included in { } as multiplex information shown under number 5 in FIG. 5.

In FIG. 5, the structure of each of the pieces of multiplex information shown under number 0 to number 5 will be explained below.

Multiplex information shown by number 0 indicates that a single multiplex frame contains only control data and the control data is repeated c0 bytes long.

Multiplex information shown by number 1 indicates that a single multiplex frame contains only audio data and the audio data is repeated a1 bytes long.

Multiplex information shown by number 2 indicates that a single multiplex frame contains audio data and video data and the audio data is repeated a2 bytes long and thereafter the video data is repeated v2 bytes long.

Multiplex information shown by number 3 indicates that a single multiplex frame contains only video data and the video data is repeated v3 bytes long.

Multiplex information shown by number 4 indicates that a single multiplex frame contains control data, audio data, and video data and the control data is repeated c4 bytes long, then the audio data is repeated a4 bytes long, and thereafter the video data is repeated v4 bytes long.

Multiplex information shown by number 5 indicates that a single multiplex frame contains control data, audio data, and video data and the control data is repeated c5 bytes long and then the audio data is repeated a5 bytes long. A combination of the control data and audio data is regarded as one information unit. Multiplex information shown by number 5 further indicates that the information unit is repeated twice in total and then the video data is repeated v5 bytes long.

Then, after a communication link is established with the caller's radio communication terminal MS4, the answering service center VSC passes control from step 9f to step 9g, where the answering service center VSC reads the response composed of the audio data and video data previously registered by the called-party's radio communication terminal MS2 from the terminal information storage section 74a. Then, the multiplexing section 75 multiplexes the audio data and video data by the multiplexing scheme determined in the connecting process (step 9h). The answering service center VSC transmits the multiplexed response to the caller's radio communication terminal MS4 (step 9i).

In contrast, when the response has arrived, the radio communication terminal MS4 causes the demultiplexing section to separate the response into the audio data and the video data by the multiplexing scheme informed by the answering service center VSC in the connecting process and subjects the audio and video data to a decoding and reproducing process. As a result, for example, the video data representing the face of the user of the called-party's terminal MS2 is displayed on the video display section 64 and a message to tell the caller the absence of the user is outputted in sound at the speaker 54.

It is assumed that the user of the caller's radio communication terminal MS4 who has known from the response that the user at the other party is absent operates the terminal to transmit a message. Then, in the radio communication terminal MS4, the multiplexing section 41 multiplexes the video data representing the user's face shot by the camera 21 and the audio message inputted by the microphone 11 by the multiplexing scheme informed by the answering service center VSC in the connecting process. Then, the communication I/F 42 transmits the transmission data created by the multiplexing as the message to the answering service center VSC.

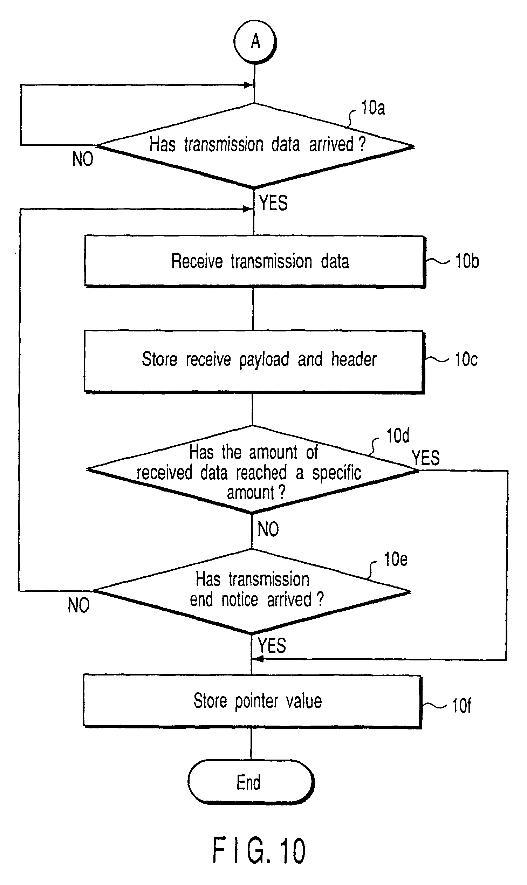

After transmitting the response, the answering service center VSC monitors the arrival of the transmission data at step 10a as shown in FIG. 10. In this state, when the transmission data has arrived from the caller's radio communication terminal MS4, the demultiplexing section 72 extracts the header from the transmission data and inputs the header to the main control section 77. According to the contents of the header, the main control section 77 gives a store instruction to the storage control section 73. On the basis of the instruction, the main control section 77 stores not only the payload where the audio data and video data have been multiplexed but also its header and the multiplex information representing the multiplexing scheme determined in the connecting process into the notice message storage section 74b as shown in FIG. 7 (step 10c).

Then, at step 10d and step 10e, the answering service center VSC monitors whether the amount of information in each payload has reached a specific amount and whether a transmission end notice has arrived. When the amount of information in the payload has reached a specific amount or when an end notice has arrived from the caller's radio communication terminal MS4, the answering service center VSC registers the pointer value representing the memory address of the previously stored payload in the terminal information corresponding to the radio communication terminal MS2 stored in the terminal information storage section 74a (step 10f).

In this way, the message for the absentee is registered.

On the other hand, it is assumed that the radio communication terminal MS2' outside a communication range has returned to radio zone Z1. Then, a position registering process is carried out between the radio communication terminal MS2 and base station BS1. The mobile communication switching system MNW notifies the result of the position registration to the answering service center VSC.

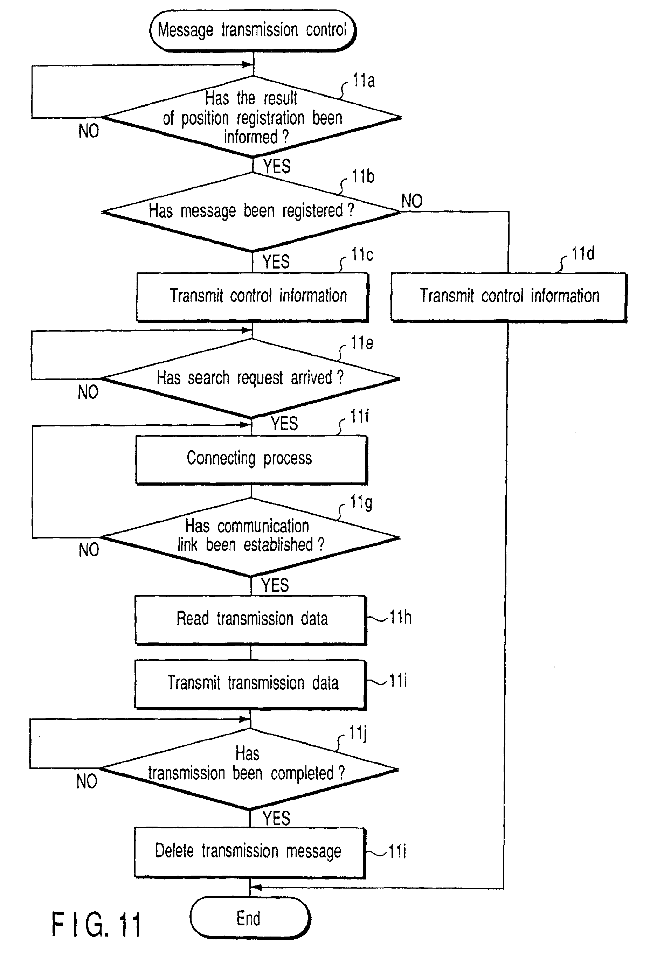

The answering service center VSC is monitoring the arrival of the result of the position registration at step 11a as shown in FIG. 11. In this state, when receiving the notice of the result of the position registration, the answering service center VSC determines at step 11b whether the message for the relevant radio communication terminal MS2 has been registered in the message storage section 74b. If the message has been registered, the main control section 77 creates control information to that effect. The communication I/F 71 transmits the control information to the relevant radio communication terminal MS2 (step 11c). If the message has not been registered, control is passed to step lid, where control data to that effect is created. Then, the control data is transmitted to the radio communication terminal MS2.

When the control information has arrived, the radio communication terminal MS2 causes the main control section 33 to display a specific mark on the display unit, thereby informing the user of the presence of the message for the user. When the user operates the terminal to search for the message for the user, the radio communication terminal MS2 transmits a message search request to the answering service center VSC.

The answering service center VSC is monitoring the arrival of the message search request from the radio communication terminal MS2 at step 11e. In this state, when the message search request has arrived from the radio communication terminal MS2, the answering service center VSC searches the terminal information storage section 74a on the basis of the terminal identification ID of the requesting radio communication terminal MS2 and carries out the connecting process with the requesting radio communication terminal MS2 according to the registered multiplex information (step 11f). Then, after a communication link has been established, control is passed from step 11g to step 11h, where the header and payload are read from the memory area of the message storage section 74b specified by the pointer. The communication I/F 71 transmits the transmission data including the header and payload to the requesting radio communication terminal MS2 (step 11i).

After having transmitted the transmission data, the answering service center VSC passes control from step 11i to step 11k, where the center VSC deletes the transmission data just transmitted from the memory area of the message storage section 74b.

The radio communication terminal MS2 stores the transmission data received from the communication I/F 42 into the memory 44 temporarily. Then, the demultiplexing section 46 separates the payload in the transmission data into the audio data and video data according to the contents of the header and supplies the resulting data items to a decoding and reproducing process. As a result, the video representing the face of the user of the caller's radio communication terminal MS4 is displayed on the video display section 64. Furthermore, the speaker 54 outputs an audio message indicating the contents of the user's message in sound.

As described above, with the embodiment, when a response registration request has arrived from the radio communication terminals MS1 to MSn, the answering service center VSC determines multiplex information the radio communication terminals MS1 to MSn can use during its connecting process and stores it together with the response into the terminal information storage section 74a. When a call for the absent radio communication terminal that has registered the response has been made, the answering service center VSC selects the best multiplex information for both terminals on the basis of the multiplex information stored in the terminal information storage section 74a and the multiplex information the caller's radio communication terminal can use, and then carries out the connecting process. Next, the caller's radio communication terminal transmits the message multiplexed according to the selected multiplex information. Then, the message is stored in the message storage section 74b.

Accordingly, when receiving the message transmitted from the caller's radio communication terminal, the answering service center VSC determines the multiplexing scheme to be used, taking into account not only the multiplexing scheme the caller's radio communication terminal can use but also the multiplexing scheme the called-party's radio communication terminal can use stored in registering the message. As a result, even when the communication capability of the caller's radio communication terminal differs from that of the called-party's radio communication terminal, or even when the communication capability the caller requests differs from communication to communication, the called-party's radio communication terminal can reproduce the message reliably.

Since the multiplex information for the requesting radio communication terminal is obtained using the registering process of the response from the radio communication terminal, the multiplex information can be registered easily and reliably without adding a dedicated process for storing multiplex information about the radio communication terminals in the answering service center VSC.

Furthermore, the answering service center VSC stores the message in the message storage section 74b in such a manner that the payload and header constituting the massage are caused to correspond to each other without demultiplexing them and transmits the message as it is to a radio communication terminal. Therefore, the audio data and video data are separated accurately and reproduced from the payload received at the radio communication terminal without providing special synchronizing means.

The present invention is not limited to the above embodiment. For instance, in the embodiment, the explanation has been given using the case where the multiplex information about the radio communication terminals MS1 to MSn are registered in the answering service center VSC using the registering process of the responses from the radio communication terminals MS1 to MSn. However, the means of registration is not restricted to this. When the power supply of each of the radio communication terminals MS1 to MSn is turned on or the position registering process is carried out because of movement between cells, multiplex information about the radio communication terminals MS1 to MSn may be determined and registered in the answering service center VSC.

In the embodiment, the answering service center VSC selects the one whose multiplexing efficiency is the highest from the pieces of multiplex information the caller's radio communication terminal and called-party's radio communication terminal can use.

The present invention is not limited to this. The answering service center VSC may select the pieces of multiplex information the caller's radio communication terminal and called-party's radio communication terminal can use and informs the caller of these pieces of multiplex information. Then, the caller's radio communication terminal may select the desired one from the pieces of multiplex information notified and multiplex pieces of information on the basis of the selected piece of multiplex information.

For instance, it is assumed that both of the caller's radio communication terminal and the called-party's radio communication terminal have supported the multiplexing schemes under number 0 to number 3 excluding number 4 and number 5. In this case, the main control section 77 of the answering service center VSC selects four types of multiplex information indicated by number 0 to number 3 and informs the caller's radio communication terminal MS4 of the four types of multiplex information. On the basis of the type and size of information to be transmitted, the caller's radio communication terminal MS4 selects the one whose multiplexing efficiency is the highest from the notified four types of multiplex information under number 0 to number 3. Then, according to the multiplexing scheme represented by the selected multiplex information, the information is multiplexed and transmitted to the answering service center VSC.

With this configuration, the caller's radio communication terminal itself can always select the best multiplexing scheme on the basis of the type and size of information to be transmitted.

Furthermore, in the embodiment, the case where the answering service center VSC is provided outside the mobile communication switching system MNW has been explained. However, the answering service center VSC may be provided within the mobile communication switching system MNW or at each of the base stations BS1 to BSm.

In addition, in the embodiment, an explanation has been given using the case where, when the called-party's radio communication terminal is incommunicable, the message the caller's radio communication terminal transmitted is stored in the answering service center VSC in place of the called-party's radio communication terminal.

The present invention is not limited to this. For instance, in a case where the radio communication terminal is provided with an answering and recording function, when the user cannot take a call, the message transmitted from the caller's communication terminal may be stored in the called-party's radio communication terminal itself making use of the answering and recording function.

Moreover, the present invention can be applied to not only a cellular phone system using ground waves but also a mobile communication system using communications satellites. As for multiplexing schemes, the present invention can be applied to not only the H.223 scheme but also other schemes, including the H.222 scheme.

Still furthermore, as for the type or configuration of the system, the configuration of the answering service center, and the configuration of each radio communication terminal, this invention may be practiced or embodied in still other ways without departing from the spirit or essential character thereof.

### Industrial Applicability

As explained above in detail, in the present invention, a network is provided with communication capability storage means which stores the communication capability of each of the radio communication terminals, communication capability selecting means, and alternative communication control means. When the called-party's terminal is incommunicable, the communication capability selecting means determines the communication capability used in alternative communication with the caller's terminal on the basis of the communication capability the caller's terminal has and the communication capabilities of the called-party's terminal stored in the communication capability storage means. On the basis of the determined communication capability, the alternative communication control means receives the message arrived from the caller's terminal and stores it.

Therefore, according to the present invention, it is possible to provide not only a mobile communication system with an answering service function which enables the called-party's radio communication terminal to reproduce the message reliably even when the radio communication terminals differ in communication capability, or even when the communication capability varies from communication to communication, but also a network system thereof and radio communication terminals.

## Claims

1. A mobile communication system including a plurality of radio communication terminals differing in communication capabilities and a network for switching between the radio communication terminals to enable communication, said mobile communication system **characterized in that**
said network comprises:
first storage means for storing the communication capability of each of said radio communication terminals;
communication capability selecting means for selecting the communication capability used for communication with a first terminal requesting communication on the basis of the communication capability the first terminal has and the communication capability of a second terminal at the called party stored in said first storage means; and
alternative communication control means for receiving message arrived from the first terminal on the basis of the communication capability selected by the communication capability selecting means and storing the received message in second storage means in such a manner that the received message is caused to correspond to said selected communication capability.

2. A mobile communication system including a plurality of radio communication terminals differing in communication capability and a network for switching between the radio communication terminals to enable communication, said mobile communication system **characterized in that**
said network comprises:
first storage means for storing the communication capability of each of said radio communication terminals;
determining means for determining whether a second terminal is in a communicable state when a request to communicate with the second terminal has arrived from a first terminal in said radio communication terminals;
communication capability selecting means for, when the determining means has determined that said second terminal is in an incommunicable state, selecting communication capability used for communication with the first terminal on the basis of the communication capability the first terminal requesting communication has and the communication capability of the second terminal stored in said first storage means; and
alternative communication control means for receiving message arrived from the first terminal on the basis of the communication capability selected by the communication capability selecting means and storing the received message in second storage means in such a manner that the received message is caused to correspond to said selected communication capability.

3. The mobile communication system according to claim 2, **characterized in that**
when each radio communication terminal is provided with a plurality of multiplexing schemes to multiplex different types of information,
said communication capability selecting means compares a plurality of multiplexing schemes the first terminal requesting communication has with a plurality of multiplexing schemes provided for the second terminal and stored in said first storage means and selects the one whose multiplexing efficiency is the highest from the multiplexing schemes both the first and second terminals have.

4. The mobile communication system according to claim 2, **characterized in that**
said alternative communication control means, when receiving message from the first terminal, stores a payload constituting the received message and its communication capability in such a manner that the former and the latter are caused to correspond to each other.

5. The mobile communication system according to claim 2, **characterized in that**
said network further comprises communication capability storage control means for, when a specific access request to the network has arrived from said radio communication terminals, detecting the communication capability the requesting radio communication terminal has in a connecting process for establishing a communication link between the network and the requesting radio communication terminal and storing the detected communication capability in said first storage means.

6. The mobile communication system according to claim 4, **characterized in that**
said communication capability storage control means, when an absence response registration request has arrived from a radio communication terminal, detects the communication capability the requesting radio communication terminal has in a connecting process for establishing a communication link between the network and the requesting radio communication terminal and stores the detected communication capability in said first storage means.

7. The mobile communication system according to claim 5, **characterized in that**
said communication capability storage control means, when a position registration request has arrived from a radio communication terminal, detects the communication capability the requesting radio communication terminal has in the connecting process for establishing the communication link between the network and the requesting radio communication terminal and stores the detected communication capability in said first storage means.

8. The mobile communication system according to claim 2, **characterized in that**
said network further comprises:
monitoring means for monitoring whether said second terminal has returned to the communicable state after said alternative communication control means has received the message; and
message transmitting means for, when the monitoring means has determined that said second terminal has returned to the communicable state, reading the message for the second terminal from said second storage means and transmitting the message to the second terminal on the basis of the communication capability stored in such a manner that the communication capability is caused to correspond to the message.

9. A network for switching between a plurality of radio communication terminals differing in communication capability to enable communication, said network **characterized by** comprising:
first storage means for storing the communication capabilities of each of said radio communication terminals;
determining means for determining whether a second terminal is in a communicable state when a request to communicate with the second terminal has arrived from a first terminal in said radio communication terminals,;
communication capability selecting means for, when the determining means has determined that said second terminal is in an incommunicable state, selecting communication capability used for communication with the first terminal on the basis of the communication capability the first terminal requesting communication has and the communication capability of the second terminal stored in said first storage means; and
alternative communication control means for receiving message arrived from the first terminal on the basis of the communication capability selected by the communication capability selecting means and storing the received message in second storage means in such a manner that the received message is caused to correspond to said selected communication capability.

10. The network according to claim 9, **characterized in that**
when each radio communication terminal is provided with a plurality of multiplexing schemes to multiplex different types of information,
said communication capability decision means compares a plurality of multiplexing schemes the first terminal requesting communication has with a plurality of multiplexing schemes provided for the second terminal and stored in said first storage means and selects the one whose multiplexing efficiency is the highest from the multiplexing schemes both the first and second terminals have.

11. The network according to claim 9, **characterized in that**
said alternative communication control means, when receiving message from the first terminal, stores a payload constituting the message and its communication capability in such a manner that the former and the latter are caused to correspond to each other.

12. The network according to claim 9, **characterized by** further comprising:
communication capability storage control means for, when a specific access request to the network has arrived from said radio communication terminals, detecting the communication capability the requesting radio communication terminal has in a connecting process for establishing a communication link between the network and the requesting radio communication terminal and storing the detected communication capability in said first storage means.

13. The network system according to claim 12, **characterized in that**
said communication capability storage control means, when an absence response information registration request has arrived from the radio communication terminal, detects the communication capability the requesting radio communication terminal has in a connecting process for establishing a communication link between the network and the requesting radio communication terminal and stores the detected communication capability in said first storage means.

14. The network according to claim 12, **characterized in that**
said communication capability storage control means, when a position registration request has arrived from the radio communication terminal, detects the communication capability the requesting radio communication terminal has in the connecting process for establishing the communication link between the network and the requesting radio communication terminal and stores the detected communication capability in said first storage means.

15. The network according to claim 9, **characterized by** further comprising:
monitoring means for monitoring whether said second terminal has returned to the communicable state after said alternative communication control means has received the message; and
message transmitting means for, when the monitoring means has determined that said second terminal has returned to the communicable state, reading the message for the second terminal from said second storage means and transmitting the message to the second terminal on the basis of the communication capability stored in such a manner that the communication capability is caused to correspond to the message.

16. A radio communication terminal including a plurality of multiplexing means for multiplexing different types of information, said radio communication terminal **characterized by** comprising:
determining means for, when a communication request has arrived from an other-party's communication apparatus, determining whether a user of the radio communication terminal can respond to said communication request;
selecting means for, when the determining means has determined that the user of the radio communication terminal cannot respond to said communication request, selecting a multiplexing scheme used for communication on the basis of the multiplexing scheme said communication apparatus requesting communication has and the multiplexing scheme the radio communication terminal has;
answering communication control means for receiving the multiplex message arrived from said communication apparatus requesting communication on the basis of the multiplexing scheme arrived from said communication apparatus requesting communication and storing the received multiplex message in storage means; and
reproducing means for reading the multiplex message from said storage means according to a playback instruction inputted by the user, demultiplexing the multiplex message according to the multiplexing scheme, and reproducing the message.
